# EUROPÄISCHE PATENTSCHRIFT

(11) **EP 4 308 853 B1**
(45) Veröffentlichungstag und Bekanntmachung des Hinweises auf die Patenterteilung: **16.07.2025**
(21) Anmeldenummer: 22715622.1
(22) Anmeldetag: 17.03.2022
(51) Int. Cl.: F23D 14/24

(54) **BRENNER UND VERFAHREN ZUM VERBRENNEN EINES WASSERSTOFFHALTIGEN BRENNSTOFFS**
BURNER AND PROCESS FOR BURNING A HYDROGEN-CONTAINING FUEL
BRÛLEUR ET PROCÉDÉ PERMETTANT LA COMBUSTION D'UN COMBUSTIBLE CONTENANT DE L'HYDROGÈNE

(30) Priorität: 17.03.2021 DE 102021001419
(43) Veröffentlichungstag der Anmeldung: 24.01.2024
(73) Patentinhaber: Messer Austria GmbH, 2352 Gumpoldskirchen (AT)
(72) Erfinder: DEMUTH, Martin, 2353 Guntramsdorf (AT)
(74) Vertreter: Münzel, Joachim R.
(86) Internationale Anmeldenummer: PCT/EP2022/056939
(87) Internationale Veröffentlichungsnummer: WO 2022/194991

(56) Entgegenhaltungen:
- WO-A1-00/61992
- DE-B- 1 060 082
- IT-A1- UB20 156 239
- US-A- 4 813 867
- US-A1- 2009 111 064

## Beschreibung

Die Erfindung betrifft einen Brenner zum Verbrennen eines wasserstoffhaltigen Brennstoffs, mit einer innerhalb einer Zuführung für ein sekundäres Oxidationsmittel aufgenommenen Brennereinheit, die eine an eine Zuleitung für einen wasserstoffhaltigen Brennstoff angeschlossene Brennstoffzuführung sowie eine Zuführung für ein primäres Oxidationsmittel umfasst, und mit einer in der Zuführung für das sekundäre Oxidationsmittel angeordneten Dralleinrichtung. Des Weiteren betrifft die Erfindung ein Verfahren zum Verbrennen eines wasserstoffhaltigen Brennstoffs mit einem sauerstoffhaltigen Oxidationsmittel.

Aus der EP 3 333 481 A1 ist ein Brenner zum Verbrennen von Wasserstoff bekannt. Der Brenner besitzt einen koaxialen Aufbau, mit einer zentralen Brennstoffzuführung für Wasserstoff sowie koaxial dazu angeordnete Zuführungen für ein primäres und ein sekundäres sauerstoffhaltiges Oxidationsmittel. Eine zusätzliche Verbrennung anderer Brennstoffe als Wasserstoff oder eine Dralleinrichtung ist hier jedoch nicht vorgesehen.

Aus der EP 3 450 843 A1 ist ein Brenner zum Verbrennen von Wasserstoffgas bekannt, bei dem konzentrisch innerhalb einer rohrförmigen Zuführung für Wasserstoffgas eine Oxidationsmittelzuführung angeordnet ist. Im Betrieb des Brenners kommt es so innerhalb der äußeren Zuführung zur Ausbildung einer schlauchförmigen Flamme. Eine ergänzende Verbrennung anderer Brennstoffe ist auch bei diesem Gegenstand nicht vorgesehen.

Aus der WO 2009/068424 A1 ist ein eine Vormischbrenner zur Verbrennung eines Wasserstoff enthaltendem Synthesegases bekannt, bei dem in einen verdrallten Luftstrom radial ein Wasserstoff oder ein Wasserstoff enthaltendes Synthesegas sowie ein weiterer flüssiger oder gasförmiger Brennstoff eingespeist wird. Das entstehende Gasgemisch wird aufgrund der Drallströmung intensiv durchmischt und in eine Brennkammer eingetragen, in der es zur Reaktion gebracht wird. Bei diesem Gegenstand ist jedoch nicht vorgesehen, die Zusammensetzung des Brennstoffs im laufenden Betrieb zu verändern.

In der WO 00/61992 A1 wird eine Brenneranordnung beschrieben, bei der ein Brenner mit einer Brennerstoffzufuhr und einer Oxidationsmittelzuführung Oxidationsmittel in einer Zuleitung für ein sekundäres Oxidationsmittel aufgenommen ist. Um die Strömungsverhältnisse den jeweiligen Anforderungen anpassen zu können, ist in der Zuleitung für das sekundäre Oxidationsmittel drehbar gelagerte Strömungselemente angeordnet.

Aus der IT UB20 156 239 A1 ist eine Brenneranordnung zum Verbrennen eines Brennstoffs mit einem Oxidationsmittel bekannt. Dem Brenner ist eine Mischstrecke vorgeschaltet, in die eine erste Zuleitung für Methan und eine zweite Zuleitung für Wasserstoff einmündet.

In der US 2009/111064 A1 wird eine Brenneranordnung beschreiben, bei der eine erste Oxidationsmittelzuführung innerhalb einer Brennstoffzuführung aufgenommen ist, die wiederum innerhalb einer zweiten Oxidationsmittelzuführung aufgenommen ist. Brennstoff und Oxidationsmittel durchlaufen vor dem Eintritt in einen Ofenraum eine Einrichtung zur Flammenstabilisierung, bei der es sich beispielsweise um eine Dralleinrichtung handelt.

Der Erfindung liegt die Aufgabe zu Grunde, einen Brenner sowie ein Verfahren zum Verbrennen eines wasserstoffhaltigen Brennstoffs mit einem sauerstoffhaltigen Oxidationsmittel anzugeben, der bzw. das flexibel bei unterschiedlichen Zusammensetzungen des Brennstoffs, insbesondere bei unterschiedlichen Wasserstoffanteilen eingesetzt werden kann und dabei in einem weiten Bereich gute Ergebnisse hinsichtlich Wirtschaftlichkeit und Schadstoffemissionen zeitigt.

Diese Aufgabe wird durch einen Brenner mit den Merkmalen des Patentanspruchs 1 sowie durch ein Verfahren mit den Merkmalen des Patentanspruchs 7 gelöst. Vorteilhafte Ausgestaltungen der Erfindung sind in den Unteransprüchen angegeben.

Der erfindungsgemäße Brenner zum Verbrennen eines wasserstoffhaltigen Brennstoffs umfasst wenigstens eine Brennstoffzuführung und jeweils wenigstens eine Zuführung für ein primäres und für ein sekundäres Oxidationsmittel. Die wenigstens eine Brennstoffzuführung und wenigstens eine Zuführung für ein primäres Oxidationsmittel sind dabei innerhalb der bzw. einer Zuführung für ein sekundäres Oxidationsmittel aufgenommen und im Folgenden auch als "Brennereinheit" zusammengefasst. Beispielsweise sind die Brennstoffzuführung/en und die Zuführung/en für das primäre Oxidationsmittel als beispielsweise konzentrisch oder parallel angeordnete, mantelseitig geschlossene Rohre ausgeführt, die konzentrisch innerhalb einer gleichfalls rohrförmigen Zuführung für das sekundäre Oxidationsmittel angeordnet sind. Jedoch sind auch andere Ausgestaltungen im Rahmen der Erfindung vorstellbar, beispielsweise eine Brennereinheit, bei der eine zentrale Zuführung für Brennstoff (oder für primäres Oxidationsmittel) radial von einer Mehrzahl an zueinander achsparallelen Zuführungen für das primäre Oxidationsmittel (bzw. für den Brennstoff) umgeben ist.

Der eigentlichen Brennstoffzuführung ist eine Mischstrecke vorgeschaltet, in die eine Zuleitung für einen wasserstoffhaltigen Brennstoff, insbesondere für reinen Wasserstoff mit einer Reinheit über 99 Vol.-%, sowie wenigstens eine Zuleitung für einen zweiten gasförmigen Brennstoff einmündet. Bei der Mischstrecke handelt es sich beispielsweise um ein der Brennstoffzuführung vorgeschaltetes Rohrleitungsstück oder um eine Mischkammer oder einen im Einbauzustand des Brenners von einer Mündung des Brenners in einen Behandlungsraum, beispielsweise einem Ofenraum oder einer Brennkammer, beabstandeten hinteren Abschnitt der Brennstoffzuführung.

In der Zuführung für das sekundäre Oxidationsmittel und bevorzugt radial außenseitig an der Brennereinheit ist eine Dralleinrichtung vorgesehen, mittels der in an sich bekannter Weise der in den Behandlungsraum eingetragene Strom des sekundären Oxidationsmittels in eine schraubenförmige Bahn gezwungen und dadurch eine Strömungsrichtung vorgegeben werden kann. Die Dralleinrichtung ist derart angeordnet, dass Brennereinheit und Dralleinrichtung relativ zueinander bewegbar sind, also die Dralleinrichtung gegenüber der Brennereinheit und der Zuführung für das sekundäre Oxidationsmittel und/oder die Brennereinheit gegenüber der Dralleinrichtung und der Zuführung für das sekundäre Oxidationsmittel. Die Bewegung von Brennereinheit und/oder Dralleinrichtung erfolgt mittels einer manuell zu betätigenden oder motorgetriebenen Verschiebeinrichtung. Beispielsweise handelt es sich bei der Dralleinrichtung um einen mit Luftleitelementen ausgerüsteten, um die Brennereinheit herum angeordneten Körper, der gegenüber der Brennereinheit und/oder gegenüber dem die Brennereinheit axial bewegbar ist, und bei dem eine kontinuierliche Bewegung der Dralleinrichtung und/oder der Brennereinheit zwischen einer ersten Position, in der Dralleinrichtung und Mündung der Brennereinheit dicht beieinander liegen, und einer zweiten Position, bei der die Dralleinrichtung gegenüber der Mündung der Brennereinheit in der Zuführung für das zweite Oxidationsmittel zurückgesetzt vorliegt, möglich ist.

Im Betrieb des Brenners werden Wasserstoff oder ein in der Mischstrecke zuvor hergestelltes Gemisch aus Wasserstoff und einem zweiten gasförmigen Brennstoff in einen Behandlungsraum eingetragen, wobei Mittel, etwa Ventile, vorgesehen sind, mit denen die Mengenströme von Wasserstoff und dem zweiten Brennstoff sowie deren Verhältnis variabel einstellbar ist. Das primäre und das sekundäre Oxidationsmittel werden über die entsprechenden Zuführungen in den Behandlungsraum eingetragen und erst in diesem mit dem Brennstoff zur Reaktion gebracht. Auch die Mengenströme von primärem und sekundärem Oxidationsmittel sowie deren Verhältnis können über geeignete Mittel, etwa Ventile unabhängig voneinander eingestellt werden. Durch Veränderung der Relativpositionen von Dralleinrichtung und Brennereinheit kann das Strömungsbild des in den Behandlungsraum eingetragenen sekundären Oxidationsmittels gezielt verändert werden.

Bevorzugt handelt es sich beim primären Oxidationsmittel um reinen Sauerstoff und beim sekundären Oxidationsmittel um Luft. Als "reiner Sauerstoff" wird im Kontext dieser Erfindung Sauerstoff mit einer Reinheit von mindestens 90 Vol.-% verstanden. Beim wasserstoffhaltigen Brennstoff handelt es sich bevorzugt um reinem Wasserstoff mit einer Reinheit von mindestens 99 Vol.-%. Der zweite gasförmige Brennstoff enthält bevorzugt keinen oder nur vernachlässigbar geringe Mengen von Wasserstoff. Beispielsweise handelt es sich dabei um Erdgas und/oder um ein Gas oder Gasgemisch mit hohem Inertgasanteil und geringem Brennwert (Schwachgas).

In einer bevorzugten Ausführungsform sind zumindest eine Brennstoffzuführung und eine Zuführung für das primäre Oxidationsmittel als konzentrisch zueinander verlaufende zylindrische Rohre ausgebildet, die untereinander keine Strömungsverbindung aufweisen. Bevorzugt ist dabei eine Brennstoffzuführung zentral innerhalb einer Zuführung für das primäre Oxidationsmittel angeordnet. In einer besonders bevorzugten Ausgestaltung münden die Brennstoffzuführung und die Zuführung für das primäre Oxidationsmittel fluchtend zueinander an einer Brennermündung der Brennereinheit in Richtung des Behandlungsraums aus.

Die Brennereinheit ist dabei bevorzugt konzentrisch innerhalb der gleichfalls zylindrischen Zuführung für das sekundäre Oxidationsmittel angeordnet, wobei im Einbauzustand die Mündung der Brennereinheit bevorzugt gegenüber der Mündung der Zuführung für das sekundäre Oxidationsmittel in den Behandlungsraum zurückgesetzt angeordnet ist, um die Brennereinheit vor Hitzeeinwirkung aus dem Behandlungsraum zu schützen. Die Zuführung für das zweite Oxidationsmittel ist entweder als in einer Brenneraufnahme (Brennerstein) eingebautes Rohr ausgebildet oder wird durch eine entsprechende zylindrische Bohrung des Brennersteins selbst gebildet.

Eine vorteilhafte Ausgestaltung des erfindungsgemäßen Brenners sieht vor, dass die Brennereinheit wenigstens zwei Brennstoffzuführungen und/oder wenigstens zwei Zuführungen für das primäre Oxidationsmittel aufweist. Mit einer solchen Anordnung besteht insbesondere eine weitere Möglichkeit, die Geometrie oder Temperatur einer sich im Behandlungsraum ausbildenden Flamme zu beeinflussen.

Der erfindungsgemäße Brenner findet bevorzugt in einem Verfahren zum Verbrennen eines wasserstoffhaltigen Brennstoffs mit einem sauerstoffhaltigen Oxidationsmittel in einem Behandlungsraum Verwendung, das durch folgende Schritte gekennzeichnet ist:
- über die Zuleitung für Wasserstoff wird Wasserstoff herangeführt und gegebenenfalls in der der Brennerzuführung vorgeschalteten Mischstecke mit einem zweiten gasförmigen Brennstoff, der über die Zuleitung für den zweiten gasförmigen Brennstoff zugeführt wurde, vermischt und der Wasserstoff bzw. das Gemisch (im Folgenden allgemein als "Brennstoff" bezeichnet) über die Brennstoffzuführung in einen Behandlungsraum eingeleitet,
- gleichzeitig wird ein primäres Oxidationsmittel, beispielsweise reiner Sauerstoff, über die Zuführung für das primäre Oxidationsmittel und gegebenenfalls ein sekundäres Oxidationsmittel, beispielsweise Luft, über die Zuführung für das zweite Oxidationsmittel in den Behandlungsraum eingeleitet,
- im Behandlungsraum werden Brennstoff und das oder die Oxidationsmittel miteinander zur Reaktion gebracht,
- in Abhängigkeit von der chemischen Zusammensetzung des in den Behandlungsraum eingetragenen Brennstoffs, insbesondere von seinem Wasserstoffgehalt oder seinem Brennwert, und/oder des Verhältnisses von aus dem Behandlungsraum zugeführtem primärem und sekundärem Oxidationsmittel, wird das Strömungsbild des in den Behandlungsraum eingetragenen sekundären Oxidationsmittels nach einem vorgegebenen Programm verändert, wobei die Änderung des Strömungsbildes durch Variation der Relativposition von Dralleinrichtung und Brennereinheit erfolgt.

Die Regelung der Relativposition von Brennereinheit und Dralleinrichtung erfolgt beispielsweise in der folgenden Weise:
Aufgrund der niedrigen Zündtemperatur und der hohen Flammengeschwindigkeit bei der Verbrennung von Wasserstoff führt ein hoher Wasserstoffanteil im Brennstoff zu höheren Temperaturen im Bereich der Mündung des Brenners in den Behandlungsraum. In diesem Falle ist es vorteilhaft, eine starke Durchmischung von Oxidationsmitteln und Brennstoff erst möglichst spät erfolgen zu lassen. Dies gilt insbesondere bei hohen Sauerstoffanteilen im Oxidationsmittel, da dies mit höheren Reaktionstemperaturen und einem geringeren, die Flamme vom Brennermund forttreibenden Mengenstrom verbunden ist. Im Grenzfall einer reinen, oder nahezu reinen, Wasserstoff-Sauerstoff-Verbrennung befindet sich die Dralleinrichtung, die aufgrund des geringen Anteils an sekundärem Oxidationsmittel in diesem Fall ohnehin nur eine untergeordnete Bedeutung hat, dann bevorzugt zurückgezogen in der Brenneraufnahme, möglichst weit entfernt von der Flamme und der Mündungsöffnung der Brennereinheit.

Je geringer der Wasserstoffanteil im Brennstoff und/oder je höher der Luftanteil im Oxidationsmittel, desto geringer wird die Flammentemperatur, und die Flamme rückt aufgrund des größeren Massestroms vom Brennermund weg. In dieser Situation ist eine intensive Durchmischung von Brennstoff und Oxidationsmittel mittels der Dralleinrichtung möglichst dicht vor dem Brennermund vorteilhaft, erfindungsgemäß erfolgt dies beispielsweise dadurch, dass sich Dralleinrichtung und Brennermund einander annähern, d.h. entweder, bei beweglicher Dralleinrichtung, wird diese in Richtung Brennermund vorgeschoben, oder, bei beweglichem Brenner, wird dieser gegenüber der in der Brenneraufnahme in einem Drall-Geschränk fixierten Dralleinrichtung zurück, in Richtung von der Brennkammer fort, geschoben.

Im Übrigen ist es mit dem erfindungsgemäßen Brenner auch möglich, das Verhältnis und die Absolutwerte der Mengenströme von primärem Oxidationsmittel (insbesondere reiner Sauerstoff) und sekundärem Oxidationsmittel (insbesondere Luft) in Abhängigkeit von einer Zusammensetzung des dem Behandlungsraum zugeführten Brennstoffs nach einem vorgegebenen Programm und/oder in Abhängigkeit von gemessenen Parametern zu regeln.

Der erfindungsgemäße Brenner kann insbesondere mit einem aus Wasserstoff sowie Erdgas und/oder einem anderen gasförmigen Brennstoff, insbesondere Schwachgas, bestehendem Brennstoffgemisch, sowie mit reinem Sauerstoff als erstem und Luft als zweitem Oxidationsmittel betrieben werden, wobei das Verhältnis aus Wasserstoff zu Erdgas und/oder das Verhältnis aus Sauerstoff und Luft auch während des laufenden Betriebs in einem weiten Umfang verändert werden kann.

Der erfindungsgemäße Brenner bzw. das erfindungsgemäße Verfahren ist bevorzugt auch zur Herbeiführung einer flammenlosen Verbrennung im Behandlungsraum geeignet. Dazu werden die Ströme von Brennstoff und dem primären und/oder dem sekundären Oxidationsmittel mit einem derart hohen Impuls in den Behandlungsraum eingetragen, dass es dort zu einer intensiven Rezirkulation der Abgase im Behandlungsraum und in der Folge zur Ausbildung einer flammenlosen Verbrennung kommt.

Anhand der Zeichnungen sollen Ausführungsbeispiele der Erfindung näher erläutert werden. In schematischen Ansichten zeigen:
Fig. 1: Einen erfindungsgemäßen Brenner in einer ersten Ausführungsform im Längsschnitt in einer ersten Betriebsposition,
Fig. 2: Den Brenner aus Fig. 1 in einer zweiten Betriebsposition,
Fig. 3: Einen erfindungsgemäßen Brenner in einer zweiten Ausführungsform im Längsschnitt in einer ersten Betriebsposition,
Fig. 4: Den Brenner aus Fig. 3 in einer zweiten Betriebsposition.

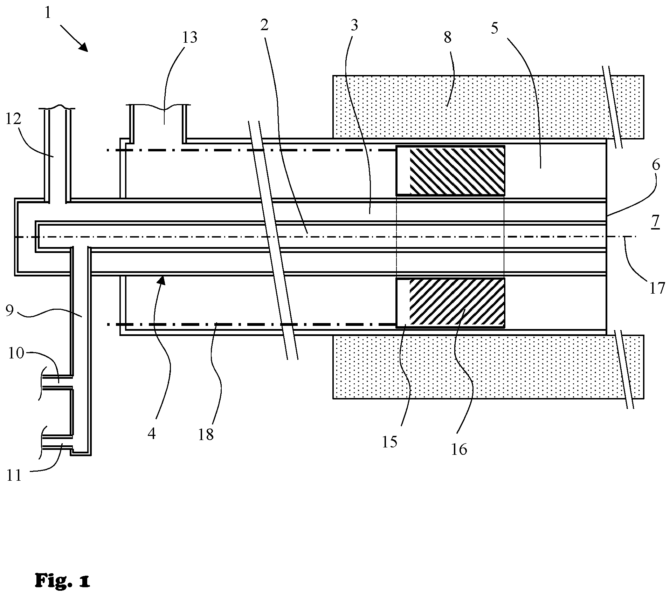

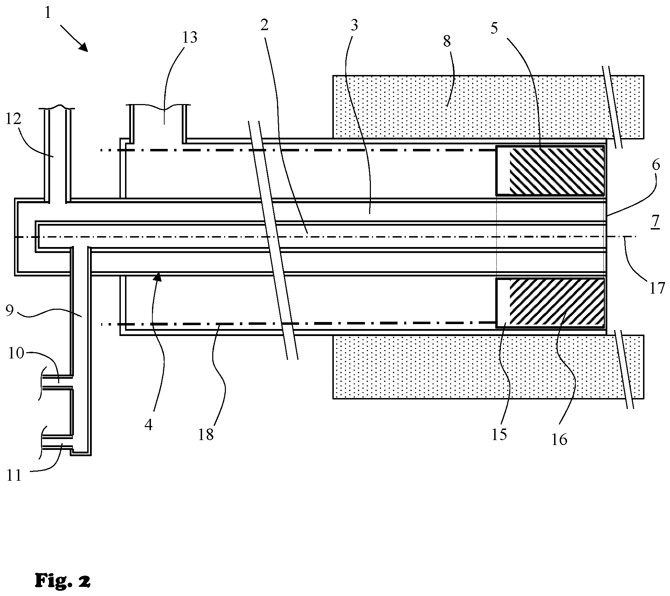

Der in den Fig. 1 und 2 ausschnittsweise gezeigte Brenner 1 umfasst in einer koaxialen Anordnung eine zentrale Brennstoffzuführung 2, die radial außenseitig von einer Zuführung 3 für ein primäres Oxidationsmittel, beispielsweise Sauerstoff, umgeben ist; Brennstoffzuführung 2 und Zuführung 3 für das primäre Oxidationsmittel bilden gemeinsam eine Wasserstoff/Sauerstoff - Brennereinheit 4. Radial außenseitig an der Brennereinheit 4 und koaxial zu dieser schließt sich eine Zuführung 5 für ein sekundäres Oxidationsmittel, beispielsweise Luft, an. Die Zuführungen 2, 3, 5 münden an einem Brennermund 6 in einen Behandlungsraum 7 ein, bei dem es sich beispielsweise um eine Brennkammer oder einen Ofenraum handelt. Der dem Behandlungsraum 7 zugewandte Vorderabschnitt des Brenners 1 ist, mit dem Brennermund 6 gegenüber dem Behandlungsraum 7 zurückgesetzt, in einer Brenneraufnahme (Brennerstein) 8 eingefasst.

Die Brennstoffzuführung 2 ist über einen Rohrabschnitt 9 mit zwei Zuleitung 10, 11 strömungsverbunden, über die jeweils unterschiedliche gasförmige Brennstoffe eingeleitet und im Rohrabschnitt 9 miteinander vermischt werden, bevor das entstehende Brennstoffgemisch über die Brennstoffzuführung 2 in den Behandlungsraum 7 eingetragen wird. Insbesondere wird über die Zuleitung 10 reiner gasförmiger Wasserstoff und über Zuleitung 11 ein zweiter, gasförmiger und wasserstoffarmer Brennstoff, beispielsweise Erdgas, eingetragen.

In die Zuführung 3 für primäres Oxidationsmittel mündet im hier gezeigten Ausführungsbeispiel eine mit einer hier nicht gezeigten Sauerstoffquelle, beispielsweise einem Standtank, strömungsverbundene Zuleitung 12 für reinen Sauerstoff (mit einer Reinheit von über 90 Vol.-%) und in die Zuführung 5 eine Zuleitung 13 für Luft ein. Die Zuführungen 2, 3, 5 weisen in ihrer gesamten Länge bis zum Brennermund 6 keine Strömungsverbindung untereinander auf. Erst vor dem Brennermund 6 erfolgt eine Durchmischung der über die Zuführungen 2, 3, 5 eingeleiteten Gase. In den Zeichnungen nicht gezeigt, gleichwohl vorhanden, ist eine Zündvorrichtung an sich üblicher Bauart zum Zünden des in den Behandlungsraum 7 eingeleiteten Brennstoff-Oxidationsmittelgemisches.

In der Zuführung 5 für das sekundäre Oxidationsmittel ist eine Dralleinrichtung 15 angeordnet. Die Dralleinrichtung 15 erstreckt sich im hier gezeigten Ausführungsbeispiel koaxial um die Brennereinheit 4 herum und ist mit spiralförmig angeordneten Luftleitelementen 16 ausgerüstet, mittels denen der über die Zuführung 5 eingeleitete Gasstrom in eine wirbelförmige Bewegung um eine Brennerachse 17 gezwungen wird.

Die Dralleinrichtung 15 ist im in den Fig. 1 und 2 gezeigten Ausführungsbeispiel axialbeweglich innerhalb der Zuführung 5 angeordnet, wobei sie mittels einer hier durch strichpunktierte Linien nur angedeutete Vortriebsmechanik 18 auch während des laufenden Betriebs bewegt werden kann. Dabei kann die Dralleinrichtung 15 kontinuierlich zwischen einer Position, in der sie sich wie in Fig. 1 gezeigt, tief in der Zuführung 5 beabstandet vom Brennermund 6 befindet, und einer Position, in der sie, wie in Fig. 2 gezeigt, mit einer Vorderfläche bündig, oder wenigstens nahezu bündig, mit dem Brennermund 6 abschließt, bewegt werden.

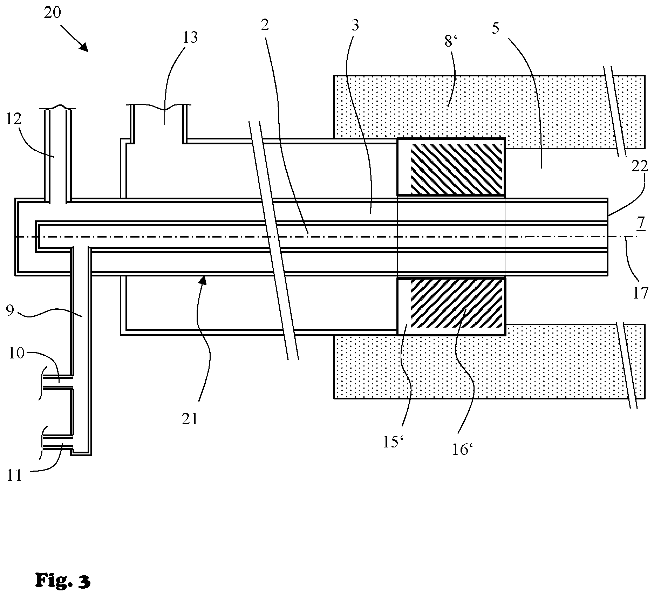

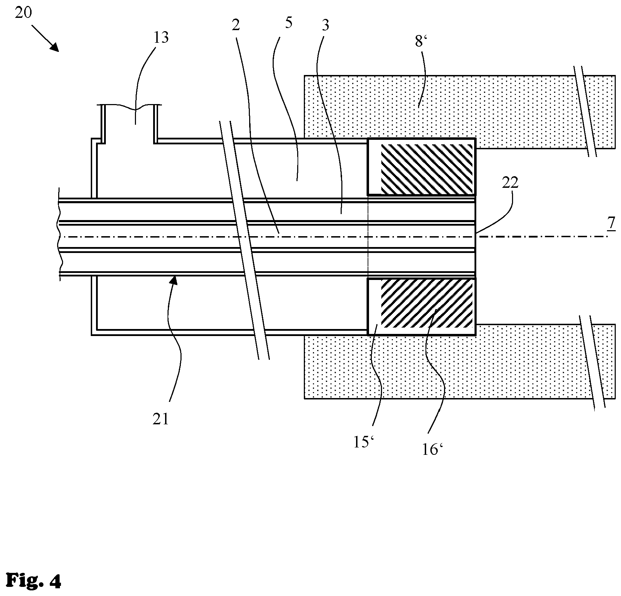

Der in Fig. 3 und in Fig. 4 - dort nur mit seinem Vorderabschnitt -gezeigte Brenner 20, bei dem im Übrigen gleich wirkende Elemente mit den gleichen Bezugsziffern versehen wurden wie beim Brenner 1 in Fig. 1 und 2, unterscheidet sich vom Brenner 1 lediglich darin, dass in der Zuführung 5 für das sekundäre Oxidationsmittel eine axial gegenüber der Zuführung 5 nicht verschiebbare Dralleinrichtung 15' eingebaut ist. Die Dralleinrichtung 15' ist in üblicher Weise mit spiralförmigen Luftleitelementen 16' ausgerüstet und mit einer Brenneraufnahme 8' fest zu einem Drall-Geschränk verbunden. Dabei ist die Dralleinrichtung 15' zurückgesetzt in der Brenneraufnahme 8' montiert, um eine Beschädigung durch Hitzeeinwirkung aus dem Behandlungsraum 7 zu vermeiden.

Gleichzeitig ist beim Ausführungsbeispiel nach Fig. 3 und 4 die aus den Zuführungen 2 und 3 gebildete Brennereinheit 21 gegenüber der Brenneraufnahme 8', und damit gegenüber der Dralleinrichtung 15', axial verschiebbar ausgebildet. Dabei kann die Brennereinheit 21 mittels einer Verschiebeeinrichtung 23 kontinuierlich zwischen einer Position, in der sie sich, wie in Fig. 3 gezeigt, innerhalb der Brenneraufnahme 8' in Richtung zum Behandlungsraum 7 beabstandet von der Dralleinrichtung 15' vorsteht, und einer Position, in der sie, wie in Fig. 4 gezeigt, mit einer Vorderfläche bündig, oder wenigstens nahezu bündig, mit der Dralleinrichtung 15' in der Brenneraufnahme 8' zurückgezogen vorliegt.

Die Brenner 1, 20 sind insbesondere dazu bestimmt, einen aus den Komponenten Wasserstoff und einem zweiten gasförmigen Brennstoff, wie etwa Erdgas und/oder ein Schwachgas, zusammengesetztes Gemisch in variabler und auch während des laufenden Betriebs sich ändernder Zusammensetzung mit einem Oxidationsmittel, das aus Sauerstoff oder einem Sauerstoff-Luft-Gemisch in ebenfalls variabler Zusammensetzung besteht, zu verbrennen. Da die unterschiedlichen Zusammensetzungen von Brennstoff und Oxidationsmittel zu unterschiedlichen Flammengeometrien und -temperaturen führen, ist es während des Betriebs zudem erforderlich, die von der Dralleinrichtung 15, 15' herbeigeführten Strömungsverhältnisse anzupassen.

Die Fig. 1 und 3 zeigen eine Situation, bei der ein Brennstoff mit hohem Wasserstoffanteil - im Grenzfall reiner Wasserstoff - mit einem (gegenüber Luft) sauerstoffreichen primären Oxidationsmittel - im Grenzfall reiner Sauerstoff - verbrannt wird, welches über die Zuführung 3 in den Behandlungsraum 7 eingetragen wird. In diesem Fall führt die Verbrennung nicht nur zu hohen Flammentemperaturen, sondern der vergleichsweise geringe oder völlig entfallende Strom an sekundärem Oxidationsmittel (Luft) über die Zuführung 5 führt zu einer Entstehung einer Flamme im Behandlungsraum 7 nahe am Brennermund 6.

Die Dralleinrichtung 15, 15' ist dabei zum Schutz vor Hitze tief in der Brenneraufnahme 8, 8' zurückgezogen angeordnet. Der hohe Impuls der aus den Zuführungen 2, 3 in den Behandlungsraum 7 eintretenden Gase führt zu einer intensiven Rezirkulation von Teilen der Atmosphäre im Behandlungsraum 7, wodurch in der Folge eine flammenlose Verbrennung im Behandlungsraum 7 entstehen kann.

Mit steigendem Anteil an durch die Zuführung 5 eingetragenem sekundärem Oxidationsmittel (Luft) im gesamten in den Behandlungsraum 7 eingetragenen Oxidationsmittel (nachfolgendend insgesamt "Oxidationsmittel") verstärkt sich der in den Behandlungsraum 7 eingetragene Massenstrom, die Flamme verschiebt sich vom Brennermund 6 weg und die Dralleinrichtung 15, 15' wird vom Strom des zweiten Oxidationsmittels gekühlt. Um in diesem Fall eine gute Durchmischung von Brennstoff und Oxidationsmittel zu gewährleisten, wird die Dralleinrichtung 15, 15' und Brennereinheit 4, 21 so bewegt, dass der dem Behandlungsraum 7 zugewandte Vorderabschnitt der Dralleinrichtung 15, 15' und die Mündung der Brennereinheit 4, 21 sich einander annähern. Je näher die Dralleinrichtung 15, 15' und die Mündung der Brennstoffzuführung 2 zusammenrücken, umso stärker ist der Einfluss des verdrallten Oxidationsmittelstroms auf den Brennstoffstrom. Der in den Fig. 2 und 4 gezeigte Grenzfall beschreibt insbesondere eine Situation, bei der kein oder fast kein primäres Oxidationsmittel (Sauerstoff) über die Zuführung 3 eingeleitet wird, sondern das Oxidationsmittel nahezu ausschließlich aus sekundärem Oxidationsmittel (Luft) besteht, das über Zuführung 5 eingetragen wird.

Bei sich verändernden Zusammensetzungen von Brennstoff und/oder Oxidationsmittel kann die Position der Dralleinrichtung 15 bzw. der Brennereinheit 21 im laufenden Betrieb geändert und den jeweiligen Anforderungen angepasst und geregelt werden. Dies erfolgt entweder manuell oder über eine hier nicht gezeigte automatische Steuerung nach einem vorgegebenen Programm. Beispielsweise kann die Relativposition der Dralleinrichtung 15, 15' gegenüber der Brennereinheit 4, 21 in Abhängigkeit von einer gemessenen Wasserstoffkonzentration im zugeführten Brennstoff oder einer Temperatur im Behandlungsraum 7 geregelt werden. Im Übrigen muss die Dralleinrichtung 15, 15' im Grenzfall eines maximalen Eintrags von sekundärem Oxidationsmittel über die Zuführung 5 keinesfalls, wie hier gezeigt, bündig mit der Mündung der Brennstoffzuführung 2 abschließen; vielmehr hängt die für den Verbrennungsprozess bevorzugte Position der Dralleinrichtung von der Geometrie und Ausrichtung der Luftleitelemente 16, 16' ab.

Im Übrigen ist es im Rahmen der vorliegenden Erfindung auch vorstellbar, in der Brennereinheit 4, 21 eine weitere Zuführung für primäres Oxidationsmittel (Sauerstoff) vorzusehen, um die Flammengeometrie noch besser variieren zu können.

Weiterhin ist der erfindungsgemäße Brenner 1, 20 insbesondere auch zur Verbrennung von Schwachgasen mit niedrigem Heizwert geeignet, das zu diesem Zweck mit dem zweiten gasförmigen Brennstoff (Erdgas) vermischt oder ausschließlich als zweiter gasförmiger Brennstoff eingesetzt und über die Zuleitung 11, den Rohrabschnitt 9 und die Brennstoffzuführung 2 in den Behandlungsraum 7 eingeleitet wird.

### Bezugszeichenliste

- 1: Brenner
- 2: Brennstoffzuführung
- 3: Zuführung für primäres Oxidationsmittel
- 4: Brennereinheit
- 5: Zuführung für sekundäres Oxidationsmittel
- 6: Brennermund
- 7: Behandlungsraum
- 8, 8': Brenneraufnahme
- 9: Rohrabschnitt
- 10: Zuleitung (für Wasserstoff)
- 11: Zuleitung (für Erdgas)
- 12: Zuleitung (für Sauerstoff)
- 13: Zuleitung (für Luft)
- 14: -
- 15, 15': Dralleinrichtung
- 16, 16': Luftleitelemente
- 17: Brennerachse
- 18: Vortriebsmechanik
- 19: -
- 20: Brenner
- 21: Brennereinheit
- 22: Mündung (der Brennereinheit)

## Patentansprüche

1. Brenner zum Verbrennen eines wasserstoffhaltigen Brennstoffs, mit einer innerhalb einer Zuführung (5) für ein sekundäres Oxidationsmittel aufgenommenen Brennereinheit (4, 21), die eine an eine Zuleitung (10) für einen wasserstoffhaltigen Brennstoff angeschlossene Brennstoffzuführung (2) sowie eine Zuführung (3) für ein primäres Oxidationsmittel umfasst, und mit einer in der Zuführung (5) für das sekundäre Oxidationsmittel angeordneten Dralleinrichtung (15, 15'),
**dadurch gekennzeichnet,**
**dass** der Brennstoffzuführung (2) der Brennereinheit (4, 21) eine Mischstrecke (9) vorgeschaltet ist, in die die Zuleitung (10) für Wasserstoff sowie mindestens eine Zuleitung (11) für einen zweiten gasförmigen Brennstoff einmünden, und die Dralleinrichtung (15, 15') und die Brennereinheit (4, 21) relativ zueinander bewegbar sind,
wobei die Brennereinheit (4, 21) innerhalb der Zuführung (5) für das sekundäre Oxidationsmittel axial gegenüber dieser und gegenüber der Dralleinrichtung (15, 15') verschiebbar aufgenommen ist
und/oder die Dralleinrichtung (15, 15') innerhalb der Zuführung (5) für das sekundäre Oxidationsmittel axial verschiebbar gegenüber dieser und der Brennereinheit (4, 21) aufgenommen ist.

2. Brenner nach Anspruch 1, **dadurch gekennzeichnet, dass** die Brennstoffzuführung (2) und die Zuführung (3) für das primäre Oxidationsmittel konzentrisch zueinander in der Brennereinheit (4, 21) angeordnet sind und diese konzentrisch innerhalb der Zuführung (5) für das sekundäre Oxidationsmittel angeordnet ist.

3. Brenner nach Anspruch 1 oder 2, **dadurch gekennzeichnet, dass** die Brennstoffzuführung (2) und die Zuführung (3) für das primäre Oxidationsmittel miteinander fluchtend an einer einem Behandlungsraum (7) zugewandten Mündung der Brennereinheit (4, 21) ausmünden.

4. Brenner nach einem der vorhergehenden Ansprüche, **dadurch gekennzeichnet, dass** die Brennereinheit (4, 21) wenigstens zwei Brennstoffzuführungen (2) . und/oder wenigstens zwei Zuführungen (3) für das primäre Oxidationsmittel aufweist.

5. Verfahren zum Verbrennen eines wasserstoffhaltigen Brennstoffs mit einem sauerstoffhaltigen Oxidationsmittel in einem Behandlungsraum unter Einsatz eines Brenners (1, 20) nach einem der vorhergehenden Ansprüche,
**dadurch gekennzeichnet, dass**
- Wasserstoff über die Zuleitung (10) für Wasserstoff und gegebenenfalls ein zweiter gasförmiger Brennstoff über die Zuleitung (11) für den zweiten gasförmigen Brennstoff in der Mischstrecke vermischt und über die Brennstoffzuführung (2) in einen Behandlungsraum (7) eingeleitet wird,
- gleichzeitig ein primäres Oxidationsmittel über die Zuführung (3) für das primäre Oxidationsmittel und gegebenenfalls ein sekundäres Oxidationsmittel über die Zuführung (5) für das zweite Oxidationsmittel in den Behandlungsraum (7) eingeleitet wird,
- im Behandlungsraum (7) der Brennstoff und das oder die Oxidationsmittel miteinander vermischt und zur Reaktion gebracht werden,
- in Abhängigkeit von der chemischen Zusammensetzung des in den Behandlungsraum (7) eingetragenen Brennstoffs und/oder des Verhältnisses aus dem Behandlungsraum (7) zugeführtem primärem und sekundärem Oxidationsmittel das von der axialen Relativposition von Dralleinrichtung (15, 15') und Brennereinheit (4, 21) bestimmte Strömungsbild des in den Behandlungsraum (7) eingetragenen sekundären Oxidationsmittels nach einem vorgegebenen Programm verändert wird.

6. Verfahren nach Anspruch 5, **dadurch gekennzeichnet, dass** als primäres Oxidationsmittel Sauerstoff und als sekundäres Oxidationsmittel Luft eingesetzt wird.

7. Verfahren nach einem der Ansprüche 5 oder 6, **dadurch gekennzeichnet, dass** als zweiter gasförmiger Brennstoff Erdgas und/oder ein Schwachgas mit niedrigem Heizwert zum Einsatz kommt.

8. Verfahren nach einem de Ansprüche 5 bis 7, **dadurch gekennzeichnet, dass** das Verhältnis der Mengenströme von primärem und sekundärem Oxidationsmittel in Abhängigkeit von einer Zusammensetzung des dem Behandlungsraum (7) zugeführten Brennstoffs nach einem vorgegebenen Programm und/oder in Abhängigkeit von gemessenen Parametern geregelt wird.

9. Verfahren nach einem der Ansprüche 5 bis 8, **dadurch gekennzeichnet, dass** im Behandlungsraum (7) eine flammenlose Verbrennung erfolgt.

## Claims

1. Burner for combustion of a hydrogen-containing fuel, comprising a burner unit (4, 21) which is accommodated within a feed (5) for a secondary oxidant and comprises a fuel feed (2) connected to an inlet (10) for a hydrogen-containing fuel and a feed (3) for a primary oxidant, and comprising a swirl device (15, 15') disposed in the feed (5) for the secondary oxidant,
**characterized**
**in that** upstream of the fuel feed (2) of the burner unit (4, 21) is a mixing zone (9) into which there open the inlet (10) for hydrogen and at least one inlet (11) for a second gaseous fuel, and the swirl device (15, 15') and the burner unit (4, 21) are movable relative to one another,
wherein the burner unit (4, 21) is accommodated within the feed (5) for the secondary oxidant so as to be movable axially with respect to the latter and with respect to the swirl device (15, 15')
and/or the swirl device (15, 15') is accommodated within the feed (5) for the secondary oxidant so as to be movable axially with respect to the latter and to the burner unit (4, 21).

2. Burner according to Claim 1, **characterized in that** the fuel feed (2) and the feed (3) for the primary oxidant are arranged concentrically to one another in the burner unit (4, 21), and the latter is disposed concentrically within the feed (5) for the secondary oxidant.

3. Burner according to Claim 1 or 2, **characterized in that** the fuel feed (2) and the feed (3) for the primary oxidant open out flush with one another at a mouth of the burner unit (4, 21) that faces a treatment space (7).

4. Burner according to any of the preceding claims, **characterized in that** the burner unit (4, 21) has at least two fuel feeds (2) and/or at least two feeds (3) for the primary oxidant.

5. Method of combustion of a hydrogen-containing fuel with an oxygen-containing oxidant in a treatment space using a burner (1, 20) according to any of the preceding claims,
**characterized in that**
- hydrogen via the inlet (10) for hydrogen and optionally a second gaseous fuel via the inlet (11) for the second gaseous fuel are mixed in the mixing zone and introduced into a treatment space (7) via the fuel feed (2),
- a primary oxidant is simultaneously introduced into the treatment space (7) via the feed (3) for the primary oxidant, and optionally a second oxidant via the feed (5) for the second oxidant,
- the fuel and the oxidant(s) are mixed with one another and reacted in the treatment space (7),
- depending on the chemical composition of the fuel introduced into the treatment space (7) and/or the ratio of primary and secondary oxidant fed to the treatment space (7), the flow profile of the secondary oxidant introduced into the treatment space (7), which is determined by the axial relative position of swirl device (15, 15') and burner unit (4, 21), is varied according to a defined program.

6. Method according to Claim 5, **characterized in that** the primary oxidant used is oxygen and the secondary oxidant used is air.

7. Method according to either of Claims 5 and 6, **characterized in that** the second gaseous fuel used is natural gas and/or a lean gas having low calorific value.

8. Method according to any of Claims 5 to 7, **characterized in that** the ratio of the flow rates of primary and secondary oxidant is controlled depending on a composition of the fuel fed to the treatment space (7) according to a defined program and/or depending on measured parameters.

9. Method according to any of Claims 5 to 8, **characterized in that** there is flameless combustion in the treatment space (7).

## Revendications

1. Brûleur pour la combustion d'un combustible contenant de l'hydrogène, avec une unité de brûleur (4, 21) reçue à l'intérieur d'une amenée (5) pour un oxydant secondaire, qui comprend une amenée de combustible (2) raccordée à une conduite d'alimentation (10) pour un combustible contenant de l'hydrogène ainsi qu'une amenée (3) pour un oxydant primaire, et avec un appareil de tourbillonnement (15, 15') agencé dans l'amenée (5) pour l'oxydant secondaire,
**caractérisé**
**en ce que** l'amenée de combustible (2) de l'unité de brûleur (4, 21) est précédée d'une section de mélange (9) dans laquelle débouchent la conduite d'alimentation (10) pour l'hydrogène ainsi qu'au moins une conduite d'alimentation (11) pour un deuxième combustible gazeux, et l'appareil de tourbillonnement (15, 15') et l'unité de brûleur (4, 21) sont mobiles l'un par rapport à l'autre,
l'unité de brûleur (4, 21) étant reçue à l'intérieur de l'amenée (5) pour l'oxydant secondaire de manière à pouvoir se déplacer axialement par rapport à celle-ci et par rapport à l'appareil de tourbillonnement (15, 15')
et/ou l'appareil de tourbillonnement (15, 15') étant reçu à l'intérieur de l'amenée (5) pour l'oxydant secondaire de manière à pouvoir être déplacé axialement par rapport à celle-ci et à l'unité de brûleur (4, 21).

2. Brûleur selon la revendication 1, **caractérisé en ce que** l'amenée de combustible (2) et l'amenée (3) pour l'oxydant primaire sont agencées de manière concentrique l'une par rapport à l'autre dans l'unité de brûleur (4, 21) et celle-ci est agencée de manière concentrique à l'intérieur de l'amenée (5) pour l'oxydant secondaire.

3. Brûleur selon la revendication 1 ou 2, **caractérisé en ce que** l'amenée de combustible (2) et l'amenée (3) pour l'oxydant primaire débouchent en alignement l'une avec l'autre au niveau d'une embouchure de l'unité de brûleur (4, 21) tournée vers une chambre de traitement (7).

4. Brûleur selon l'une quelconque des revendications précédentes, **caractérisé en ce que** l'unité de brûleur (4, 21) présente au moins deux amenées de combustible (2) et/ou au moins deux amenées (3) pour l'oxydant primaire.

5. Procédé pour la combustion d'un combustible contenant de l'hydrogène avec un oxydant contenant de l'oxygène dans une chambre de traitement en utilisant un brûleur (1, 20) selon l'une quelconque des revendications précédentes,
**caractérisé en ce que**
- de l'hydrogène par la conduite d'alimentation (10) pour l'hydrogène et éventuellement un deuxième combustible gazeux par la conduite d'alimentation (11) pour le deuxième combustible gazeux sont mélangés dans la section de mélange et introduits dans une chambre de traitement (7) par l'amenée de combustible (2),
- un oxydant primaire est introduit simultanément dans la chambre de traitement (7) par l'amenée (3) pour l'oxydant primaire et éventuellement un oxydant secondaire par l'amenée (5) pour le deuxième oxydant,
- dans l'espace de traitement (7), le combustible et le ou les oxydants sont mélangés entre eux et mis en réaction,
- en fonction de la composition chimique du combustible introduit dans la chambre de traitement (7) et/ou du rapport entre l'oxydant primaire et l'oxydant secondaire amenés dans la chambre de traitement (7), le schéma d'écoulement de l'oxydant secondaire introduit dans la chambre de traitement (7), déterminé par la position relative axiale de l'appareil de tourbillonnement (15, 15') et de l'unité de brûleur (4, 21), est modifié selon un programme prédéfini.

6. Procédé selon la revendication 5, **caractérisé en ce que** l'on utilise de l'oxygène comme oxydant primaire et de l'air comme oxydant secondaire.

7. Procédé selon l'une quelconque des revendications 5 ou 6, **caractérisé en ce que** l'on utilise comme deuxième combustible gazeux du gaz naturel et/ou un gaz pauvre à faible pouvoir calorifique.

8. Procédé selon l'une quelconque des revendications 5 à 7, **caractérisé en ce que** le rapport des débits d'oxydant primaire et d'oxydant secondaire est régulé en fonction d'une composition du combustible amené à la chambre de traitement (7) selon un programme prédéfini et/ou en fonction de paramètres mesurés.

9. Procédé selon l'une quelconque des revendications 5 à 8, **caractérisé en ce qu'**une combustion sans flamme est effectuée dans la chambre de traitement (7).
